# EUROPEAN PATENT APPLICATION

(11) **EP 4 851 383 A2**
(43) Date of publication of application: **09.12.2026**
(21) Application number: 26214705.1
(22) Date of filing: 11.06.2025
(51) Int. Cl.: E02F 9/26

(54) **WORKING MACHINE**

(30) Priority: 12.06.2024 GB 202408432
(62) Document number(s) of the earlier application(s) in accordance with Art. 76 EPC: 25733093.6 / 4 798 795
(71) Applicant: J.C. Bamford Excavators Limited, Uttoxeter Staffordshire ST14 5JP (GB)
(72) Inventor: SLATER, Stephen, Uttoxeter ST14 5JP (GB); SMALL, Charlie, Uttoxeter ST14 5JP (GB); SMITHERINGALE, Benjamin, Uttoxeter ST14 5JP (GB); NIXON, John, Uttoxeter ST14 5JP (GB)
(74) Representative: Foot, Paul Matthew James

(57) **Abstract**

A working machine comprising:
an operator station; and
an operator seat located at the operator station;
the operator station comprising controls for moving the working machine via the ground engaging propulsion structure and working arm controls for controlling movement of the first working arm relative to the body;
the operator seat being moveable between a first position and a second position;
a display being positioned at the operator station and within the operator's field of vision when seated on the seat in the second position
a further display being positioned at the operator station and within the operator's field of vision when seated on the seat in the first position;
the working machine being configured such that at least when the seat is positioned in the first position at least one of the following is displayed on the further display: a drive state of a transmission of the working machine, a steer mode of the working machine, a wheel drive state of a ground engaging propulsion structure (2WD/4WD), a steer position (wheel alignment state) of a ground engaging propulsion structure;
the working machine being further configured such that at least when the seat is positioned in the second position at least one of the following is displayed on the display: a drive state of a transmission of the working machine, a steer mode of the working machine, a wheel drive state of a ground engaging propulsion structure (2WD/4WD), a steer position (wheel alignment state) of a ground engaging propulsion structure.

## Description

### FIELD

The present teachings relate to a working machine, in particular, but not exclusively to a backhoe loader working machine. In addition, the present teachings relate to a controller for a working machine and to a method.

### BACKGROUND

Backhoe loaders are a type of working machine comprising a working arm pivotable about a horizontal axis and extending forward of a body of the machine (referred to as a loader) and an excavating arm, referred to as a backhoe, extending rearwardly of the body. The body comprises a ground engaging propulsion structure (such as wheels) and, usually, an operator station. Such machines typically utilise a prime mover in the form of an internal combustion engine powered by diesel, but potentially also compressed natural gas (CNG), hydrogen, or a blend of these. Such machines may alternatively use one or more electric motors as the prime mover, powered either by a hydrogen fuel cell or electricity stored in one or more batteries.

An attachment, such as a shovel (sometimes referred to as a bucket), is mounted on the free end of the loader with its opening facing forward, and is also pivotable about a horizontal axis with respect to the arm. This enables the loader to scoop and move loose material such as soil, aggregates, sand and deposit it in other locations on worksites. The backhoe is typically used for operations such as trenching, with the machine stationary and supported on rear stabilisers and the front shovel, rather than its pneumatic tyres, for enhanced stability. During backhoe operations the operator typically rotates their seat to face the backhoe so the they have good visibility. They also typically set the operating speed of the prime mover to a fixed value using a hand throttle, so the operator can concentrate on the backhoe operations, knowing that the prime mover is supplying adequate power to a hydraulic pump of the machine, and therefore to the actuators causing the backhoe to move.

Whilst backhoe loaders are multipurpose machines, capable of undertaking a wide variety of excavating and materials handling tasks on a work site, there are certain tasks which combine excavating or other backhoe related operations with the need to reposition the machine, where productivity may be compromised in comparison with a dedicated excavating machine, such as a wheeled slew excavator.

### SUMMARY OF THE INVENTION

The present teachings seek to overcome, or at least mitigate, one or more problems of the prior art.

The present invention provides a working machine, controller and a method according to the appended claims.

An embodiment of the present teachings provides a working machine which may comprise:
a body; and/or
a ground engaging propulsion structure for moving the working machine; and/or
a moveably mounted first working arm; and/or
an operator station; and/or
an operator seat; and/or
the operator station may comprise controls for moving the working machine via the ground engaging propulsion structure and may comprise working arm controls for controlling movement of the first working arm relative to the body;
the operator seat may be moveable between a first position and a second position;
a display being positioned at the operator station and within the operator's field of vision when seated on the seat in the second position;
the working machine may be configured such that when the operator seat is in the first position, illumination of the display is at a first brightness level and when the operator is in the second position the display is at a second brightness level, the second brightness level being greater than the first.

Advantageously, this reduces the risk of the operator experiencing glare or reflections from the display when they are seated with the seat in its first position, particularly when operating the working machine in low light or in darkness.

In the first position the display may be turned off.

Turning the display off avoids the risk of glare being generated entirely.

The display may be horizontally offset from a straight-ahead position with respect to the seat in the second position.

Positioning the display in this location means that the display does not impair the forward view from the seat, but may increase the risk of glare when the operator is sat with the seat in its first position.

The display is horizontally offset from a straight-ahead position at an angle of between 10° and 90° from the centre of rotation of the seat, optionally between 20° and 80°, e.g. 30° and 60°.

The working machine may comprise a further display positioned at the operator station and within the operator's field of vision when seated on the seat in the first position.

This ensures the operator is readily able to see important status and or safety information when in the first position.

When the operator seat is in the second position, illumination of the further display may be at a first brightness level and when the operator is in the first position the further display may be at a second brightness level, the second brightness level being greater than the first.

Advantageously, this ensures that the likelihood of the operator experiencing glare from the further display is reduced when seated in the second position.

When the seat is positioned in the second position at least one of the following may be displayed on the display: a drive state of a transmission of the working machine, a steer mode of the working machine, a wheel drive state of a ground engaging propulsion structure (2WD/4WD), a steer position (wheel alignment state) of a ground engaging propulsion structure.

When the seat is positioned in the first position at least one of the following may be displayed on the further display: a drive state of a transmission of the working machine, a steer mode of the working machine, a wheel drive state of a ground engaging propulsion structure (2WD/4WD), a steer position (wheel alignment state) of a ground engaging propulsion structure.

Another embodiment of the present teachings provides a working machine which may comprise:
an operator station; and/or
an operator; and/or
the operator station may comprise controls for moving the working machine via the ground engaging propulsion structure and working arm controls for controlling movement of the first working arm relative to the body;
the operator seat may be moveable between a first position and a second position;
a display may be positioned at the operator station and may be within the operator's field of vision when seated on the seat in the second position
a further display may be positioned at the operator station and may be within the operator's field of vision when seated on the seat in the first position;
the working machine may be configured such that at least when the seat is positioned in the first position at least one of the following is displayed on the further display: a drive state of a transmission of the working machine, a steer mode of the working machine, a wheel drive state of a ground engaging propulsion structure (2WD/4WD), a steer position (wheel alignment state) of a ground engaging propulsion structure;
the working machine may be further configured such that at least when the seat is positioned in the second position at least one of the following is displayed on the display: a drive state of a transmission of the working machine, a steer mode of the working machine, a wheel drive state of a ground engaging propulsion structure (2WD/4WD), a steer position (wheel alignment state) of a ground engaging propulsion structure.

This advantageously ensures that the operator is readily able to view status information and/or safety information relating to the working arm when in the second position.

The further display may be horizontally offset from a straight-ahead position at an angle of between 0° and 80° from the centre of rotation of the seat in the first position, optionally between 0° and 45°.

Advantageously this ensures that the further display is positioned in the operator's line of sight in the first seat position.

The display may be horizontally offset from a straight-ahead position at an angle of between 20° and 80° from the centre of rotation of the seat in the second position, optionally between 30° and 60°.

Advantageously this ensures that the display is positioned in the operator's line of sight in the second seat position, but does not obscure the operator's straight ahead view from the operator station.

The seat may be rotatable between the first position and the second position.

This is a convenient way of moving the seat.

The first position and second position may be substantially 180° apart.

The first position may face a normal direction of travel of the working machine.

This position may afford a clear view forward to the operator when travelling around a work site, or on the road between work sites.

The second position may face the first working arm.

This position may afford a clear view of the first working arm when performing working operations.

A controller may monitor an output of sensors located to indicate the first and second positions.

Advantageously, this is a convenient way of automating the display settings.

The controller may instruct the adjustment of the brightness of the display on the basis of the output of the sensors.

The sensors may be located on a fixed or rotatable part of the seat.

The sensors may be switches.

The display may be a raster type display.

This provides flexibility in terms of the information which can be shown on the display.

The working machine, may further comprise a camera whose field of view at least partially covers an operator field of view in the first position. The display may be configured to output a video image from the camera.

This enables the display to have a dual function of allowing the operator to have a view behind them in the second position without needing to twist their body, and showing useful status and/or safety information.

A further embodiment of the present teachings provides a working machine which may comprise:
a body; and/or
a ground engaging propulsion structure for moving the working machine; and/or
a moveably mounted first working arm; and/or
an operator station; and/or
an operator seat; and/or
the operator seat being moveable between a first position facing a first direction of travel and a second position facing a second direction of travel;
the working machine optionally being operable to move the via the ground engaging propulsion structure with the operator seat being in either the first position or second position to travel forward with respect to the seat position or in reverse with respect to the seat position;
the working machine optionally comprising a first reversing alarm sounder arranged to emit sound directed principally from a first end of the working machine and a second reversing alarm sounder arranged to emit directed principally from a second end of the working machine and the working machine optionally being configured to emit a sound from the one of the first and second reversing alarm sounders if it is determined that the working machine is travelling away from the direction faced by the operator seat, and wherein the sound is optionally emitted from the reversing alarm sounder that is at the end of the working machine facing the travelling direction.

This has been found to be an effective way of alerting personnel around the machine to machine movements in the opposite direction to that which the operator is facing, by enabling the alert to have sufficient volume for the personnel, without being too loud for the operator themselves.

At least one of the first and second reversing alarm sounders may be mounted to the body of the working machine.

The operator station may be mounted offset from midpoint of the working machine in a longitudinal direction and the first reversing alarm sounder is mounted under the operator station.

This is a physically well-protected location for the first sounder, but does not heavily impair the transmission of sound to the machine surroundings, but reduces sound transmission to the operator station.

A prime mover of the working machine may be mounted under a cover offset from a midpoint of the working machine in a longitudinal direction and the first reversing alarm sounder is mounted within the cover.

This is a physically well-protected location for the second sounder, and reduces sound transmission to the operator station.

The cover may comprise a ventilation grille and the first reversing alarm sounder may be mounted adjacent the grille, for example within 30cm of the grille.

This location is well-protected, but allows for good sound transmission to the machine surroundings.

The ventilation grille may be located proximate a longitudinal extremity of the working machine.

This location is remote from the machine operator, so may reduce sound transmission to the operator.

The working machine may further comprise a controller, The controller may monitor an output of sensors located to indicate the first and second positions, optionally wherein the sensors are located on a fixed or rotatable part of the seat.

This is a convenient way of the machine knowing the orientation of the operator.

The working machine may further comprise a controller, The controller may monitor an output indicative of machine drive direction or machine drive direction demand.

This is a convenient way of the machine knowing its direction of travel.

The controller may determine which reversing alarm sounder to sound based on the sensor output indicative of seat position and the output indicative of machine drive direction or machine drive direction demand.

This is a convenient way of determining which sounder to sound.

A further embodiment of the present teachings provides a working machine which may comprise:
a body, and/or
a ground engaging propulsion structure for moving the working machine,
a moveably mounted first working arm, and/or
an operator station; and/or
an operator seat/or
wherein the operator station may comprise a primary control for operating the working machine, and a secondary control for operating the working machine;
the operator seat optionally being moveable between a first position and a second position and wherein in the first position the primary control may be configured to be operable by the operator, and in the second position the secondary control may be configured to be operable by the operator;
wherein the working machine may be configured to output an alert if, when in the first position actuation of the secondary control is sensed and/or when in the second position actuation of the primary control is sensed.

Machine operators typically use the operator station as a storage area for equipment and personal belongings and there is a risk that where the machine has controls in multiple locations, those equipment or belongings may interfere with the controls and be detrimental to operation of the machine. By providing an alert, the operator can quickly resolve the situation.

The primary control may be a primary foot brake for retarding travelling speed of the ground engaging propulsion structure.

Foot brakes are provided proximate the floor of the operator station and are therefore liable to have equipment or belongings inadvertently placed on top of them. The consequence of this occurring is particularly detrimental to brake systems and excess heat may be generated, excess wear caused, and machine fuel/energy consumption increased.

The secondary control may be a secondary foot brake for retarding travelling speed of the ground engaging propulsion structure.

Foot brakes are pedals provided proximate the floor of the operator station and are therefore liable to have equipment or belongings inadvertently placed on top of them. The consequence of this occurring is particularly detrimental to brake systems and excess heat may be generated, excess wear caused, and machine fuel/energy consumption increased.

Brake demand may be transmitted hydraulically from at least one of the primary and secondary foot brakes to a brake actuator.

Hydraulically actuated brakes are desirably utilised on working machines due to their inherent reliability, and disabling such brakes based on operator position may be undesirable as it may reduce reliability. Therefore providing an alert is a way of maintaining reliability, and machine safety and efficient operation.

The working machine, may further comprise a controller. The controller may determine actuation of the at least one of the primary and secondary foot brakes by monitoring pressure of the hydraulic fluid.

This is a convenient way of determining actuation, as it is common for hydraulic fluid pressure to be monitored for other purposes and therefore no further sensors may be required for this purpose.

The seat may be rotatable between the first position and the second position.

The first position and second position may be substantially 180° apart.

A controller may monitor an output of sensors located to indicate the first and second positions.

The working machine may comprise an excavator working arm, optionally wherein the second position faces the excavator arm.

The working machine may comprise a loader working arm, optionally wherein the first position faces the loader arm.

The working machine may be a backhoe loader.

A further embodiment of the present teachings may provide a working machine which comprises a loader arm and an operator station, such as an operator cab;
a camera mounted at the front of the operator station and having a field of view configured to capture image data of the loader arm and an area at a free end of the loader arm upon which a work implement may be mounted;
a display configured to display the image data captured by the camera.

The loader arm may comprise a work implement mounted thereto. The work implement may have outermost lateral edges defining the width of the work implement and, optionally the work machine.

The work machine may further comprise a camera mounted at the front of the operator station. The camera may have a field of view configured to capture image data of the work implement.

The work machine may comprise a display unit configured to display the image data captured by the camera. The display unit may be a rear display unit viewable by an operator when the machine is in a rear drive mode.

The camera may be configured to capture image data of one or more of: the outermost lateral edges of the work implement; an area either immediate in front of or adjacent to the outermost lateral edges; and, either or both of the front wheels.

The camera may comprise a wide angle lens. The wide angle lens may comprise a field of view of greater than 100 degrees, preferably greater than 110 degrees, preferably less than 180 degrees, preferably less than 150 degrees.

The lens may distort the field of view to provide a non-rectilinear image.

The work machine may further comprise: an engine cover extending forward of the operator station and an exhaust pipe extending vertically upwards from the engine cover within the camera field of view.

The camera may be positioned to view one of the front wheels with the other obscured by the exhaust pipe.

The lens distortion may provide a curved view of the exhaust pipe on the display unit. The curvature of the exhaust pipe may be away from the machine centre and a respective outermost lateral edge.

The operator station may comprise a structural crossmember at or proximate the front upper edge thereof which extends between front corner posts of the operator structure. The camera may be mounted on or local to the cross member.

The camera may be mounted on a support member. The support member may extend forwards of the front upper edge of the cab, such that the exhaust is laterally displaced within the field of view of the camera such that the outermost lateral edges of the work implement are not obscured by the exhaust. The camera lens may be provided at least 150mm forward of the cross member.

The working machine may be a backhoe loader.

A further embodiment of the present teachings may provide a working machine comprising:
a working arm and an operator station, such as an operator cab
a view extender mounted towards a lateral edge of the operator station, the view extender optionally being configured to provide the operator with a view of the area to the rear of the machine from the operator seat when facing rearwards in the operator cab.

The view extender may be mounted towards a rear lateral edge of the operator station.

The view extender may be configured to provide the operator with a view of the area to the rear of the machine from the operator seat when facing rearwards in the operator station.

The working arm may be positionable in a rearward travel position when in the rear drive mode. The view extender may be configured to provide a view of an area rearwards of the working arm when in the rearward travel position.

The working arm may comprise a boom and a dipper, and the rearward travel position may comprise the boom and dipper being in retracted positions in relation to the chassis and extending rearwards in a parallel relation to a principal axis of the working machine.

The working arm may be mounted to a side-shifting frame which allows the king post of the working arm, and working arm itself, to be side-shifted across the back of the machine to provide alternative working positions. In some embodiments, the king post may be laterally fixed in the centre of the machine.

The working arm may be located centrally with respect to the chassis when in the rearward travel position.

The view extender may comprise a mirror. The working machine may comprise a camera configured to capture image data for presentation on a display.

The working machine may be a backhoe loader.

A further embodiment of the present teachings provides a working machine which may comprise:
a body, and/or
a prime mover and/or
a ground engaging propulsion structure selectively powered for moving the working machine via a transmission, and/or
a moveably mounted first working arm to the body, and/or
an operator station; and/or
a working arm control device; and/or
a first speed control input device arranged to selectively set the prime mover to a constant operating speed; and/or
a second speed control input device arranged to provide instantaneous or variable control of prime mover operating speed or machine ground speed; and/or
a drive selector input device arranged to select between a neutral transmission state in which the prime mover does not provide motive power to the ground engaging propulsion structure and a drive transmission state in which the prime mover provides motive power to the ground engaging propulsion structure; optionally wherein
in an operating mode of the working machine, the working machine may be configured such that in the neutral transmission state prime mover operating speed is set by the first speed control input device at least when the working arm control device is enabled or in use, and optionally in a drive transmission state the prime mover operating speed or the machine ground speed is controlled by the second speed control input device.

Advantageously this arrangement may improve the productivity of the working machine by reducing the number of inputs the operator is required to undertake when switching between working operations and machine repositioning operations, whilst allowing the operator good control of the machine during repositioning, which may enhance safety.

The first speed control input device may be a hand throttle.

A hand throttle is familiar to machine operators as a way of setting prime mover speed (and therefore hydraulic pump output) to a suitable set value for performing working operations with the working arm with suitable power, without requiring constant interaction.

The second speed control input device may be a foot throttle.

A foot throttle typically a foot pedal and is familiar to machine operators as a way of dynamically adjusting prime mover speed to enable smooth and safe manoeuvring of the machine when repositioning it between working operations.

The foot throttle may be biased to a low speed demand state, e.g. an idling demand state.

The transmission may be a powershift transmission.

Powershift transmissions enable push-button and/or automated shifting of gears in a transmission, and controlling engine speed the primary way of adjusting ground speed for a particular selected gear.

The second speed control input device may be a foot ground speed control.

In some configurations the second speed control may be capable of directly setting ground speed based on the position of e.g. a foot pedal, to afford smooth and safe manoeuvring of the machine.

The transmission may be one of a hydrostatic transmission and a continuously variable transmission (CVT).

Such transmissions are able to be controlled in such a way that ground speed can be directly set by a an operator input device, such as a foot pedal.

The drive transmission state may be a forward and/or reverse transmission state.

The operating mode may be set by a user input.

It may be desirable for a user to determine whether the operating mode is selected or not. If it is not selected, the speed control may be conventional -i.e. the first speed control (hand throttle) is the master that sets a constant speed, but the second speed control (foot throttle/foot ground speed control) may dynamically increase speed beyond the level set by the first if actuated beyond that set point.

The working machine, may further comprising an operator seat.

The operator seat may be moveable between at least a first position and a second position.

In the second position the operator seat may face towards the working arm.

In the first position the seat may face away from the working arm.

The working machine, may further comprise primary controls for moving the working machine via the ground engaging propulsion structure, secondary controls for moving the working machine via the ground engaging propulsion structure.

The secondary controls may comprise the drive input selector.

The primary controls may be configured to be operable in the first working position to move the working machine.

The secondary controls may comprise at least one control mounted for movement together with seat
The control mounted for movement may be the drive input selector
The control mounted for movement may be a steering control.

At least one secondary control may be mounted on the first working arm controls.

The first working arm controls may comprise a joystick.

The operating mode may be set or at least permitted to be set by the position of the operator seat.

The operating mode is particularly suited to situations where the working arm is used for a period and then repositioning is required before resuming use of the working arm, therefore operator convenience may be enhanced if the mode is entered or permitted when they move the seat into a position where they use the working arm.

The first speed control input device setting may be configured to be overridden if the working arm control device is not enabled and/or been not in use for a predetermined period.

It is common for there to be periods of inactivity between working arm operations, e.g. if the operator is working in conjunction with personnel outside the working machine on a task. Therefore, fuel/energy consumption may be reduced if the machine monitors for such inactivity and overrides the first speed control device.

If overridden the prime mover may be configured to operate at a idling speed or zero speed.

A further embodiment of the present teachings provides a working machine which may comprise:
a body, and/or
a prime mover; and/or
a ground engaging propulsion structure selectively powered for moving the working machine via a transmission, and/or
a moveably mounted and selectively powered first working arm, and/or
an operator station; and/or
a working arm control device; and/or
and an operator seat; and/or
wherein in at least a position of the operator seat a forward view from the operator seat may be obscured by the working arm;
the working machine optionally comprising a function configured to move the working arm from a current position to a desired position at which working arm is in a safe position for the working machine to travel on a highway or work site and the forward view is minimally obscured.

It may require multiple manual operations to move a working arm into a position where the operator's view is minimally obscured, so travelling facing the working arm has enhanced safety. In addition operators may not be aware that a particular position affords good visibility, as such a function to move the working arm into this position may enhance operator convenience and safety.

The working arm may be an excavator arm comprising a boom pivotally mounted to the body about a vertical axis at a first end.

Such arms may be particularly prone to obscuring the operator's view given their size and location.

The function may move the boom such that it extends generally away from the body about the vertical axis.

The working arm may further comprise a dipper pivotally mounted to the boom about a horizontal axis at a second end of the boom.

The function may move the dipper such that its free end is substantially adjacent the boom.

The working arm may be mounted to the body via a side shift mechanism for lateral movement with respect to the body.

The function may position the working arm using the side shift mechanism such that it is laterally offset from a sight line directly forward of the operator seat.

This may afford the operator a still clearer forward view.

The function may be initiated by a predetermined user input, optionally an input to a single input device from the operator, for example a button press.

This may further enhance the convenience of using the function.

A further embodiment of the present teachings provides a working machine which may comprise:
a body, and/or
a ground engaging propulsion structure for moving the working machine, and/or
a moveably mounted first working arm, and/or
a controller for receiving input signals from input devices and signalling operation of output devices in accordance with its logic; and/or
an operator station; and/or
an operator seat; and/or
wherein the operator station optionally comprises primary controls for moving the working machine via the ground engaging propulsion structure, secondary controls for moving the working machine via the ground engaging propulsion structure and first working arm controls for controlling movement of the first working arm relative to the body;
wherein at least one of the secondary controls optionally comprises an input device configured to emit two outputs of a state of actuation thereof to the controller; and
wherein if the two outputs are determined to have a discrepancy therebetween by the controller; the controller may signal operation of output devices in a limited operating mode based on one of the two outputs determined to be correct.

If such a fault occurs where it is safer for an operator to be able to continue using the input device in a limited way to place the machine in a safe state or move it to a safe location that it would be to disable the input device entirely. One in such a safe state the operator may revert to using the primary controls in certain situations, until the input device may be repaired or replaced.

The limited operating mode may limit the duration of operation.

The limited operating mode may limit the speed of operation.

The limited operating mode may only permit operation whilst the input device continues to be actuated.

That is to say, when the operator moves the input device to its neutral or rest position, it then ceases to function until it is repaired or replaced.

In the limited mode of operation the primary controls may remain fully operational.

The working machine may comprises an excavator working arm.

The working machine may comprises an loader working arm.

The working machine may be a backhoe loader.

A further embodiment of the present teachings provides a working machine which may comprise:
a body, and/or
a ground engaging propulsion structure for moving the working machine, and/or
a moveably mounted first working arm, and/or
an operator station; and/o
an operator seat;
wherein the operator station optionally comprises primary controls for moving the working machine via the ground engaging propulsion structure, secondary controls for moving the working machine via the ground engaging propulsion structure and first working arm controls for controlling movement of the first working arm relative to the body;
the operator seat optionally being moveable between a first position and a second position and in the first position the primary controls are optionally configured to be operable by the operator, in the second position the secondary controls are optionally configured to be operable by the operator and the first working arm controls are optionally configured to be operable by the operator
wherein there further optionally comprises a third position intermediate the first position and the second position in which the secondary controls are configured to be inoperable but the first working arm controls are configured to be at least selectively operable.

It may be desirable in certain operating situations for the working arm controls to be enabled in an intermediate seat position, for example to afford a better view of a bucket or other implement attached to an end of the working arm. However, operation of the secondary controls in this intermediate position may not be desirable - e.g. for safety reasons, since the operator may not have a clear view of the direction of travel of the machine and/or may not be able to properly access some or all of the secondary controls for moving the working machine.

The first position may face a primary direction of movement.

The second position may face opposite to primary direction of movement.

This position may therefore be used when travelling of the machine for extended periods is required, e.g. roading.

The second position may face the working arm.

This position may be utilised when operating the working arm, in order to afford a clearer view of the working arm and implements attached thereto.

The primary controls may comprise a steering wheel.

The secondary controls may comprise at least one control mounted for movement together with seat, for example a drive input device or a steering input device.

By providing controls mounted for movement with the seat they are easy for the operator to reach, and do not take up space elsewhere around the operator station.

At least one secondary control may be mounted on first working arm controls.

This may further enhance the ergonomics for the operator, particularly if switching between operations with the working arm and repositioning operations with the secondary controls.

The first working arm controls may comprise a joystick.

The secondary controls may comprise at least one control located at a fixed position on operator station, e.g. foot brake or foot throttle.

These controls are familiar from conventional forward facing primary controls and therefore do not require the operator to learn additional input movements.

The primary controls may comprise at least one of a foot throttle, a foot brake, and a drive input device.

The working machine, may further comprise a second working arm.

The working machine may further comprise a second working arm control for the second working arm.

The second working arm control may be the same as first working arm control.

This further minimises the number of input devices at the operator station, increasing space and reducing cost.

The first working arm may be an excavator arm.

The second working arm may be a loader arm.

The seat may be rotatable.

The second position may be substantially 180° from first position.

A user input may be required to enable the secondary controls for operation.

This may ensure that the operator does not accidentally move the machine.

The user input may be configured to disable at least one of the primary controls when enabling the secondary controls, optionally the at least one control is the primary drive control.

Advantageously, this ensures that the primary control may not be activated accidentally, e.g. by another person entering the operator station.

The working machine may further comprise a third position at least 90° away, optionally 120° away from first position.

Sensors may detect the first and second positions of seat, optionally wherein the sensors are switches.

At least one of the secondary controls may be operable in first position, optionally upon receipt of a user input to enable the secondary controls.

This gives the option for the operator to have two ways of controlling movement of the working machine. For some types of work, the secondary control(s) may be convenient to use than the primary controls.

A further embodiment of the present teachings provides a working machine which may comprise:
a body, and/or
a prime mover; and/or
a ground engaging propulsion structure for moving the working machine via a transmission; and/or
a moveably mounted first working arm, and/or
an operator station; and/or
a seat mounted and/or
wherein the operator station may comprise controls for moving the working machine via the ground engaging propulsion structure and working arm controls for controlling movement of the first working arm relative to the body;
wherein the controls for moving the working machine may comprise a drive selector input device arranged to select between a neutral transmission state in which the prime mover does not provide motive power to the ground engaging propulsion structure and a drive transmission state in which the prime mover provides motive power to the ground engaging propulsion structure and a steering input device; wherein
a operating mode input device may be configured to enable/disable the drive selector input device and the steering input device.

Advantageously this allows the operator to rapidly enable and disable functions associated with moving the machine, which is both convenient and may be beneficial for safety.

The operator seat may be is moveable between a first position and a second position and the working machine may be configured to only permit the mode input device to enable the drive selector input device and the steering input device if the operator seat is in the first position or the second position.

Advantageously, this ensures that the machine may only be driven if the operator is in positions where it is safe to do so, e.g. for reasons or visibility and/or access to other controls.

The working machine may be configured to only permit the mode input device to enable the drive selector input device and the steering input device if the operator seat is in the second position.

In some instances the machine may only be safe to operate via these controls in a single position.

The operator station may further comprise primary controls for moving the working machine via the ground engaging propulsion structure, the controls being secondary controls for moving the working machine via the ground engaging propulsion structure.

The secondary controls may be configured so as to be particularly convenient for operation in certain uses, such as in combination with the working arm controls.

In the first position the primary controls may be configured to be operable by the operator.

In the second position the secondary controls may be configured to be operable by the operator and the first working arm controls may be configured to be operable by the operator.

The machine may be configured to disable at least one of the primary controls when enabling the secondary controls, optionally the at least one control is the primary drive control.

Advantageously, this ensures that the or each primary control may not be activated accidentally, e.g. by another person entering the operator station.

At least one of secondary controls may be mounted for movement with the operator seat.

This may further enhance the convenience/ergonomics of using the secondary controls.

At least one of secondary controls may be mounted on a first working arm control, optionally wherein the first working arm control comprises a joystick.

At least one of secondary controls may be mounted at a fixed position with respect to the operator station.

The working machine may be configured to set a speed limit on travelling that is lower than the maximum travelling speed of the machine when the machine is driven by the secondary controls, for example, less than 20 kilometres per hour, e.g. less than 15 kilometres an hour, .

The working machine may comprise an excavator working arm.

The working machine may comprise a loader working arm.

The working machine may be a backhoe loader.

A further embodiment of the present teachings provides a controller configured to implement a working machine function defined in any of the preceding embodiments.

A further embodiment of the present teachings provides a method of controlling the working machine of any of the preceding embodiments.

The skilled person will appreciate that except where mutually exclusive, a feature described in relation to any one of the aspects, embodiments or examples described herein may be applied mutatis mutandis to any other aspect, embodiment or example. Furthermore, except where mutually exclusive, any feature described herein may be applied to any aspect and/or combined with any other feature described herein.

### BRIEF DESCRIPTION OF THE DRAWINGS

Embodiments will now be described with reference to the accompanying drawings, in which:
Figure 1 is a side view of backhoe loader working machine according to an embodiment of the present teachings;
Figure 2 is a plan view of the backhoe loader of Figure 1
Figure 3 is a schematic hydraulic and electrical diagram of the working machine of Figure 1;
Figure 4 is a plan view of an operator station of the working machine of Figure 1 with an operator seat in a front facing position;
Figure 5 is a plan view of an operator station of the working machine of Figure 1 with the operator seat in an rear facing position;
Figure 6 is an isometric view of the operator station in the layout as Figure 5;
Figure 7 is a plan view of an operator seat of the working machine of Figure 1;
Figure 8 is an isometric view of an underside of the operator seat if Figure 7;
Figure 9 is a flowchart illustrating a process according to an embodiment of the present teachings;
Figure 10 is a flowchart illustrating a further process according to an embodiment of the present teachings;
Figure 11 is a depiction of content shown on a display of the working machine;
Figure 12 shows a working machine comprising a forward facing camera and the associated field of view in a vertical plane;
Figure 13 shows a top down view of the machine of Figure 12 having a first camera position in which the view of a lateral edge of a work implement is obscured by the exhaust;
Figure 14 shows a top down view of the machine of Figure 12 having a second camera position in which a front wheel is obscured by the exhaust;
Figure 15 shows a view as displayed on the rear display of the working machine of Figure 11;
Figure 16 shows a view of support structure for the camera;
Figure 17 shows a rear view extender; and
Figure 18 shows a plan view of a rear portion of the working machine showing an area viewable by view extender.

### DETAILED DESCRIPTION OF EMBODIMENT(S)

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

Terms such as front, rear, lateral, side, upper and lower as used herein are with reference to the orientation of the working machine on level ground. They are used for ease of understanding and should not be taken as limiting.

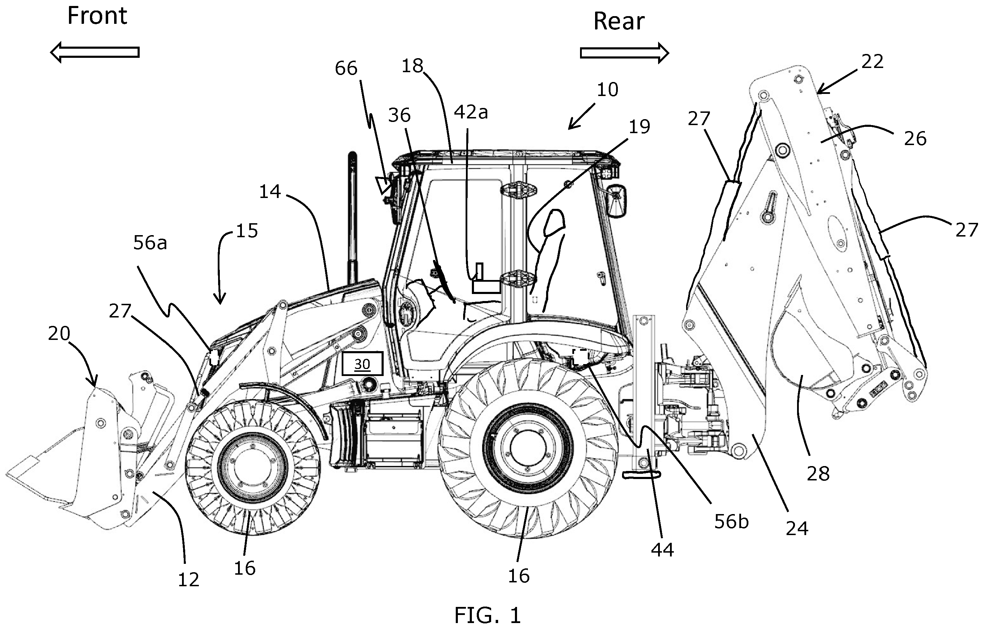

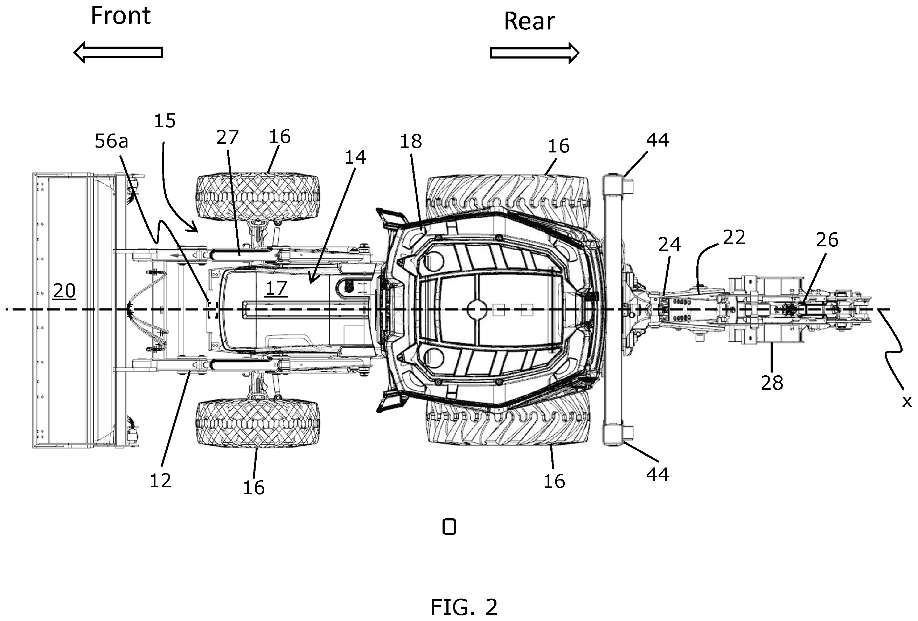

With reference to Figures 1 and 2 a working machine in the form of a backhoe loader 10 of the present teachings is illustrated. A backhoe loader 10 is a known type of loader working machine. The backhoe loader 10 comprises a loader arm 12 pivotable about a horizontal axis and extending forward of, and either side of, a body 14 of the machine. The body 14 comprises a ground engaging propulsion structure 16 (wheels in this embodiment, but tracks in other embodiments) and an operator station 18 in the form of an enclosed cab.

A shovel 20 is mounted on the free end of the loader arm 12 in the illustrated embodiment. The shovel is pivotable about a horizontal axis with respect to the loader arm 12 by a hydraulic actuator and linkage assembly as is well known, and indicated generally at 15. This arrangement enables the backhoe loader 10 to, for example, drive the shovel 20 into a pile of material when it is lowered and scoop the material into the shovel, then move the backhoe loader 10, lift the arm 12 and tip the material from the shovel 20 at another location, such as into a trailer (not shown).

The backhoe loader 10 additionally comprises an rear mounted backhoe 22, that is a form of excavating arrangement that comprises a boom 24 and dipper 26 (stick) that are pivotable about horizontal axes, with the boom also being slewably mounted to the body 14. The free end of the dipper 26 is typically fitted with a smaller bucket 28 and or other attachments (not shown) to be used for trenching operations and the like. In some embodiments, including as depicted in Figure 2, the backhoe 22 is able to be shifted laterally (transverse the front-rear direction) with respect to the body 14 to enable trenching close to obstacles, such as walls, for example.

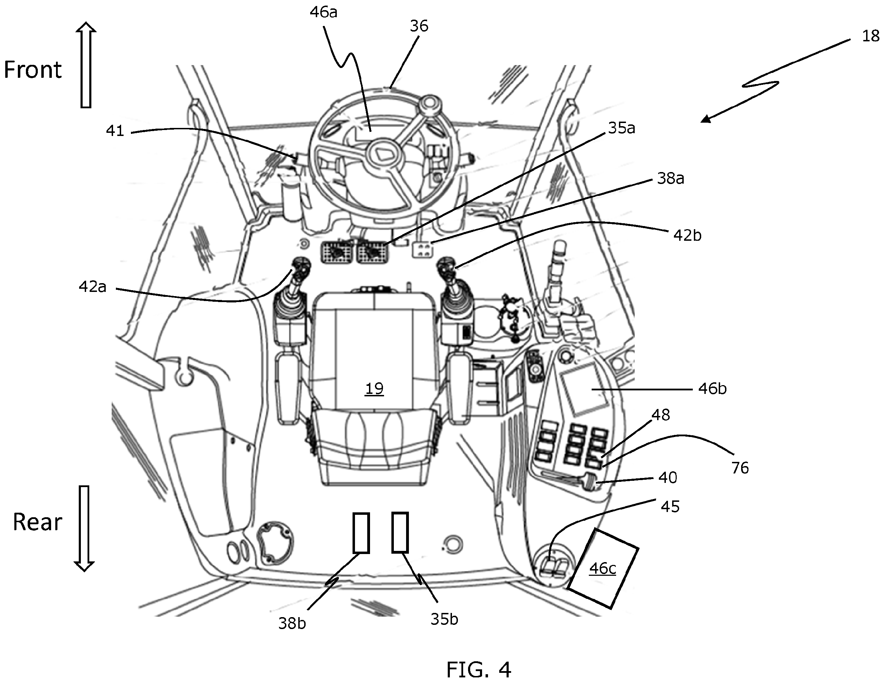

The backhoe loader 10 also includes a rear right and rear left stabilisers 44 having a ground engaging foot. Each stabiliser 44 can be independently moved between a retracted position and a deployed position via a control device 45 (Figure 4) mounted proximate the rear of the operator station 18.

As such it is a versatile tool that is found on various worksites including construction sites, quarries, farms etc.

The backhoe loader 10 is powered by a prime mover 30, such as an internal combustion engine, and/or one or more electric motors (not shown). The internal combustion engine is typically powered by diesel fuel, but may alternatively use CNG or hydrogen as fuel.

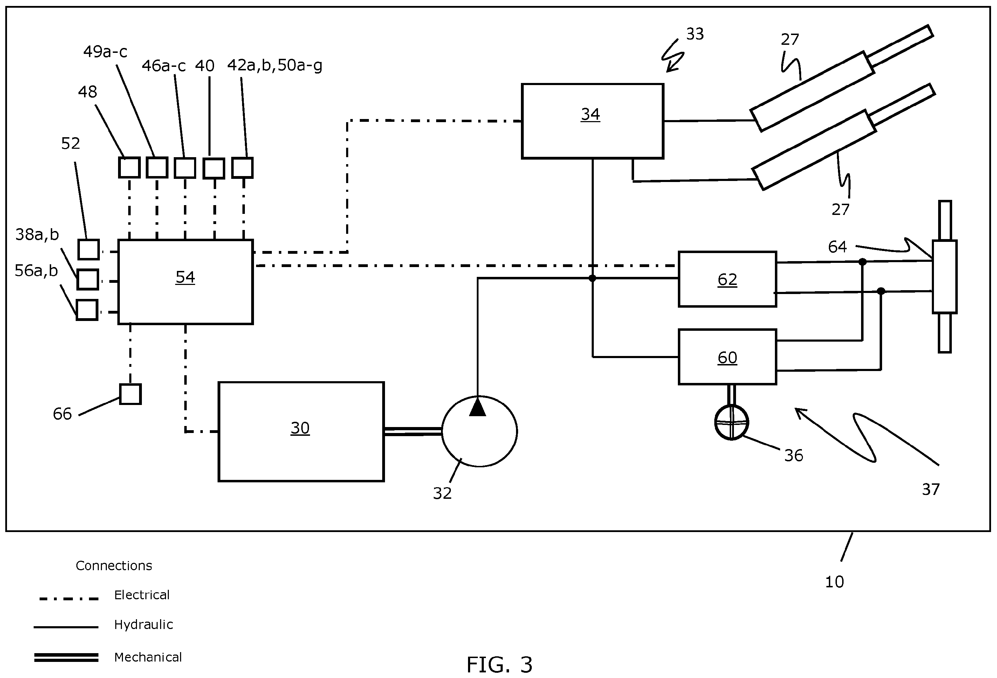

The prime mover 30 also provides power to operate a hydraulic pump 32 (Figure 3) of a hydraulic system 33 (Figure 3) which can selectively provide pressurised hydraulic fluid to the various linear actuators 27 of the machine 10 via a main control valve block 34 to operate the loader arm 12, shovel 20, boom 24, dipper 26, bucket 28, stabilisers 44 etc., to enable material to be loaded and excavated. The hydraulic pump 32 may also supply hydraulic fluid to an auxiliary service (not shown) at the end of the dipper arm 26, e.g. to power a breaker, planer, mower, hedge trimmer etc. (not shown), and to the steering and brakes of the backhoe loader 10.

The hydraulic pump 32 may also be utilised in a hydraulic steering system indicated generally at 37. The hydraulic steering system 37 comprises an orbitrol valve arrangement 60 controlled by the steering wheel 36 and a separate proportional solenoid operated steering spool valve 62 controlled by the controller 54, which are arranged in parallel. In this embodiment, the backhoe loader 10 has two wheel steering (2WS) and the outputs from both valves 60 and 62 are supplied to a steer actuator 64 controlling the front wheels 16.

In other embodiments, the backhoe loader 10 has four wheel steering (4WS) with a further steer actuator (not shown) being provided to control steering of the rear wheels 16. The orbitrol and spool valves 60, 62 feed a steer mode valve (not shown) to switch the steering between 4WS, 2WS and crab steering.

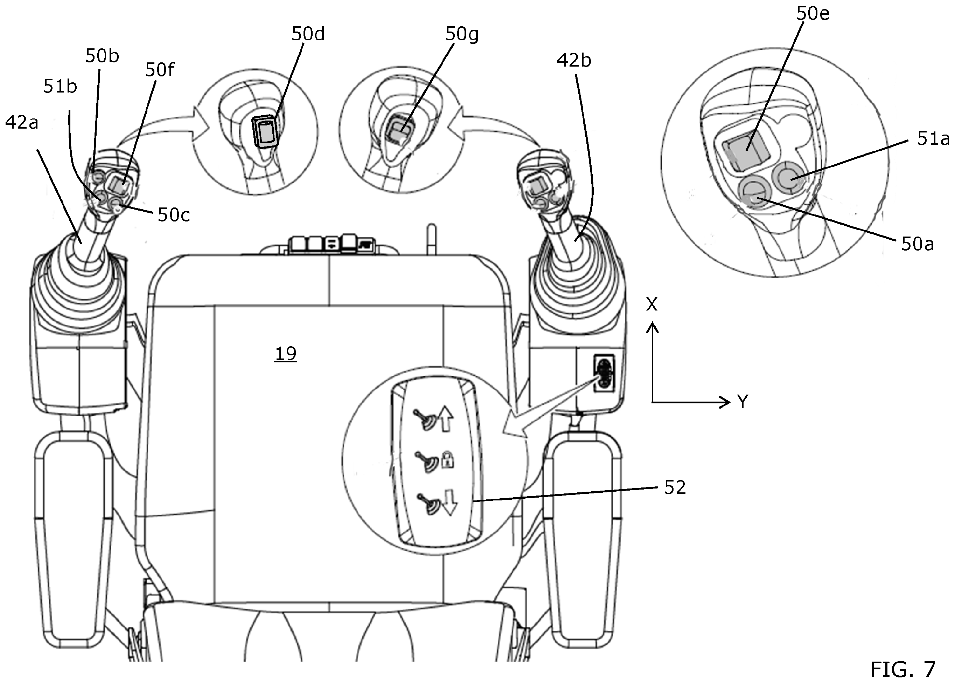

With reference to Figures 1 and 4-8 the operator station 18 has an operator seat 19. The operator station 18 is also provided with operator controls such as a steering wheel 36, front foot brake 35a, rear foot brake 35b, prime mover speed controls (front foot throttle 38a, rear foot throttle 38b, hand throttle 40), transmission drive lever 41 and working arm control levers 42a, 42b.

The rear foot brake 35b and rear foot throttle 38b are pivotably mounted relative to floor of the operator station 18 in a location at the rear of the operator station that accessible to the operator's feet when the seat 19 is in the rear facing position. Although the term throttle is utilised, it will be appreciated that this may encompass speed regulators of prime movers other than internal combustion engines, and which are within the scope of the present teachings.

The operator station 18 is also provided with displays 46a-c on which status information for the machine 10 is displayed.

The steering wheel 36, front foot brake 35a, front foot throttle 38a and the transmission drive lever 41 may be considered primary controls of the backhoe loader 10.

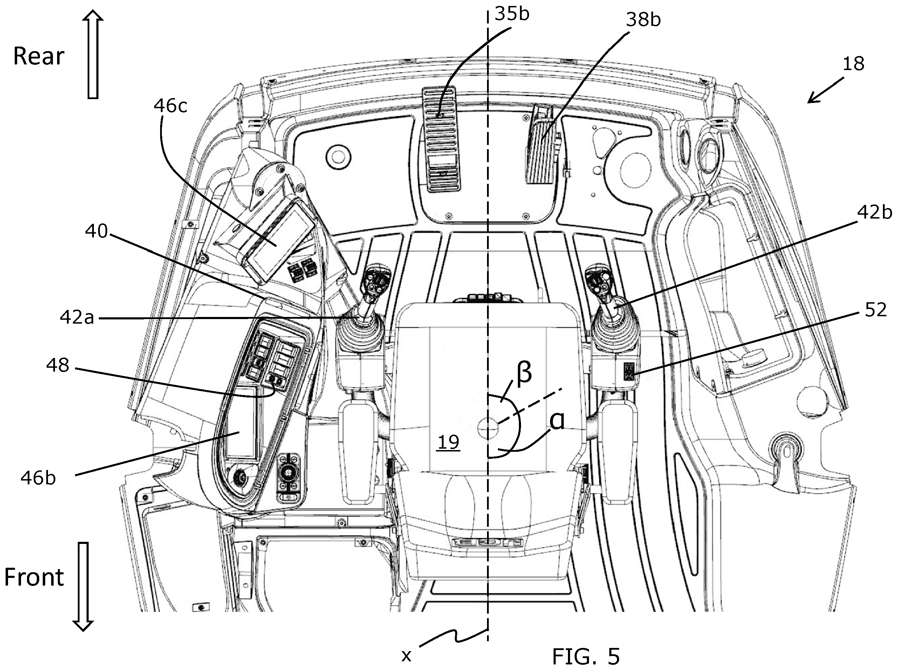

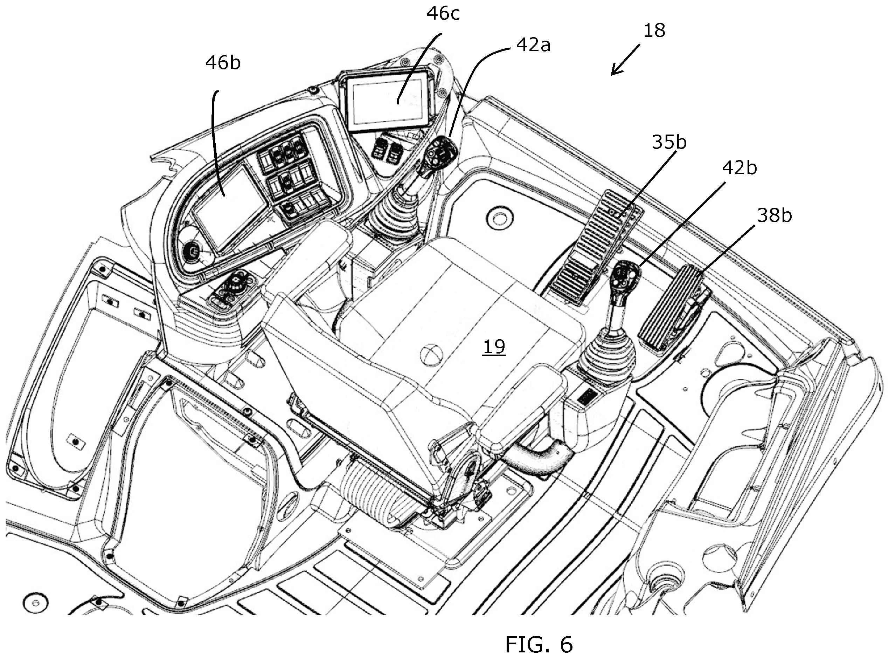

As shown in Figures 1 and 4 the operator seat 19 is facing forwards. The operator seat 19 is rotatable and can be rotated so as to face the rear of the machine 10 within the operator station 18 as shown in Figures 5 and 6. The operator seat 19 may be releasably latched or otherwise held in at least the forward and rear facing positions.

In the forward position, the operator is suitably orientated for performing loading operations by manoeuvring the machine 10 as a whole using the steering wheel 36 transmission drive lever 41, foot throttle 38a and foot brake 35a, whilst operating the loader arm 12 with the working arm control lever 42b. This forward facing position is also used for roading and moving the backhoe loader 10 around a worksite and constitutes a standard mode of operation for travelling.

When the operator seat 19 is facing rearwards, the hand throttle 40 and stabiliser control device 45 are readily accessible by the operator and the backhoe 22 is in their line of sight. This position is primarily used for operating the backhoe 22 to perform trenching, grading, breaking operations and the like.

The backhoe loader 10 comprises front and rear alert sounders 56a, b which emit sounds to personnel around the machine to alert them to movement thereof when the backhoe loader 10 is travelling in reverse (the opposite way to which the operator is facing). In this embodiment the front alert sounder 56a is located behind a ventilation grille at the front of the machine forward of the prime mover 30. The ventilation grille forms part of a cover 17 over the prime mover 30. The rear alert sounder 56b is positioned under the operator station 18 towards the rear of the backhoe loader 10.

The backhoe loader 10 may be provided with a forward facing camera 66 positioned on the operator station 18 and having a view of the front wheels 16 and forward of the shovel 20. The image feed from the camera is supplied to the controller 54 and selectively displayed on the display 46c.

Referring now to Figures 4 to 7, it can be seen that the working arm control levers 42a and 42b are mounted to the operator seat 19, particularly to the left and right arm rests thereof. In this embodiment, the machine comprises electro-hydraulic (EH) control of the machine hydraulic system 33. That is to say, that the working arm control levers 42a and 42b generate an electronic control signal that is transmitted to relevant hydraulic control valves, such as the main hydraulic control valve block 34 and control those valves using electric solenoid control. This enables the seat 19 to rotate without requiring hydraulic pilot or mechanical connections to the rest of the machine to be accommodated. Instead the rotating connection only requires the transmission of an electrical signal via a suitable wired or wireless connection. In other embodiments oil servo joysticks and the like may however by used.

It can be seen that in this embodiment the working arm control levers 42a and 42b are in the form of joysticks 42a, 42b that are able to pivot in an X and Y direction relative to the seat 19. Additionally, the control levers include additional user inputs mounted thereon in the form of buttons 50a, 50b, and 50c and roller switches 50d, 50e, 50f and 50g, which control additional hydraulic or other machine functions. The buttons 50a-c and roller switches 50e, f perform other functions relating to the working arm, such as controlling auxiliary hydraulic flow to attachments mounted to the working arm and extending/retracting a telescopic section of the dipper arm 26 (not shown). The joysticks themselves and the buttons and roller switches which control working arm functions are referred to as working arm controls.

One or more of the buttons 50a-c may act as an enable button that is pressed by the operator so the working arm controls become "live" or operable.

In this embodiment, the control levers also include LEDs 51a, 51b to provide an user output, for example they may illuminate when the working arm controls are live.

The roller switch 50d is located on the joystick 42a facing away from an operator and is arranged be displaced side-to-side about a generally vertical axis. In this embodiment, at least in certain modes of operation the roller switch 50d is used as a steering input device and hereinafter referred to as a steering roller 50d. In this embodiment the steering roller 50d is biased to a centre position and has an output which increases as it is displaced from that centre position in either direction (e.g. the output is generally proportional to the degree of displacement, but may have a "dead spot" immediately either side of the centre position).

The roller switch 50g is located on the joystick 42b facing away from an operator and is arranged be displaced up and down relative to the shaft of the joystick 42b. In this embodiment, at least in certain modes of operation the roller switch 50g is used as a drive selector input device and hereinafter referred to as a drive roller 50g. In this embodiment the drive roller 50g is stable in a central position and two further positions, one either side of centre. The centre position corresponds to drive being in neutral (N), with one further position corresponding to forward drive (F) and the other corresponding to reverse drive (R). As such, the drive roller replicates at least some functions of the transmission drive lever 41, but if forward drive is selected when the seat 19 is rear facing the backhoe loader 10 travels in the direction the seat is facing (i.e. in the direction of the rear of the backhoe loader 10).

In other embodiments the drive roller may be biased into the centre position from either of the two further positions.

In other embodiments other forms of inputs may be used as steering and drive inputs, such as levers or sliders, and these may be mounted on the joysticks 42a,b or separately on the operator seat 19 arm rests, for example.

The steering roller 50d, drive roller 50g, rear foot brake 35b and rear foot throttle 38b may be considered secondary controls of the backhoe loader 10

An excavator/loader control selector switch 52 is also located on the right arm rest adjacent the control lever 42b. This switch has three positions, a central locked position where the control levers 42a and 42b are disabled, a forward position for normal to seat operation and a rear position for opposite to seat operation. Selecting these positions changes the working arm control levers 42a and 42b between functions which control movement of the loader arm 12 and further features associated therewith, or functions that control the backhoe 22 or further features associated therewith. Backhoe 22 operation typically requires both control levers to be used in accordance with a known control pattern (ISO or SAE), whereas loader operation requires just the second joystick 42b, leaving the operator's left hand free to steer the machine 10 during loading operations.

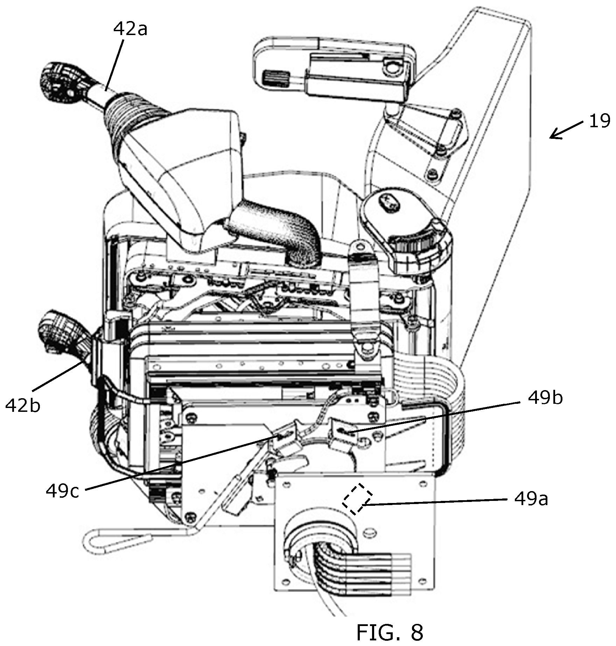

With reference to Figure 8, in this embodiment the seat 19 is provided with three switches 49a, 49b, 49c which provide outputs to indicate when the seat 19 is in its front facing position, partially rear facing and fully rear facing (i.e. turned 180° from front facing) position. The partially rear facing position is an angle α forward of the fully rear, which is the maximum an operator can position themselves in comfortably where space for their feet is not blocked by a wheel arch etc. This may vary depending upon machine configuration but may be in the range of 30° to 90°, with the switch being placed in the corresponding location. This position may be adopted by the operator to afford an better view of excavating operations off to the side of the backhoe loader 10.

In some embodiments one or more of the displays 46a-c may be a touchscreen display also capable of receiving operator inputs. In this embodiment the displays 46b and 46c are touch sensitive raster type displays, such as LCD, TFT or OLED displays. Display 46b is located to a side of the seat 19 where it may be viewed from both seat positions, and may be referred to as a side display.

The display 46c is located at the rear of the operator station 18 where it is in the line of sight of the operator with the seat rear facing and may be referred to as a rear display. The rear display 46c is located within reasonably comfortable field of view such as defined either through ergonomic trials or established through reference to state of the art legislative guidance. In particular, although ISO 6011 is not directly applicable to rear drive configurations as described herein, its principles have been applied as far as practicable in the siting of the rear display 46c.

The display 46a, which is located adjacent the steering wheel 36 at a front end of the operator station 18, and may be referred to as a front display. The front display 46a may comprise a number of illuminating symbols indicating the status of particular machine functions, and not be able to receive operator inputs.

Figure 3 schematically illustrates a portion of the hydraulic system 33, hydraulic steering system 37 and electronic control system of the backhoe loader 10 which comprises a controller 54.

The term controller may encompass multiple electronic control units (often referred to as an ECU and which can encompass multiple ECUs) may comprise: control circuitry; and/or processor circuitry; and/or at least one application specific integrated circuit (ASIC); and/or at least one field programmable gate array (FPGA); and/or single or multiprocessor architectures; and/or sequential/parallel architectures; and/or at least one programmable logic controllers (PLCs); and/or at least one microprocessor; and/or at least one microcontroller; and/or a central processing unit (CPU), to perform the described methods. The controller may include an associated memory or the memory may be located locally to the controller or remotely. The memory may be a non-volatile flash memory.

From Figure 3, it can be seen that the controller 54 receives input signals from the foot throttles 38a, b, hand throttle 40, a rear drive mode switch 48, the selector switch 52 and seat position switches 49a-c, and is able to output signals to the displays 46a-c within the operator station 18.

The control signals from the control levers 42a, 42b, switches 50a to 50g and loader/excavator selector switch 52 are also transmitted to a controller 54 e.g. using a CAN bus.

The controller 54 interprets those signals and transmits further signals to other components of the working machine 10 in accordance with its control logic.

The controller 54 is further able to send control signals to the prime mover 30, for example, to adjust the operating speed thereof and/or to start the prime mover, and is also able to receive signals therefrom, e.g., relating to the operating speed of the prime mover 30.

For the purposes of understanding the present teachings, the following terms are defined:
- Rear Facing - operator seat 19 facing the backhoe 22 end
- Front Facing - operator seat 19 facing the loader arm 12 end
- Forward Travel - travel in the direction the operator seat 19 is facing
- Reverse Travel - travel in the opposite direction to the way the operator seat is facing
- Standard Mode - operating the machine while facing the front (loader arm 12)

Operation of the rear drive functionality of the backhoe loader 10 according to an embodiment of the present teachings is now described.

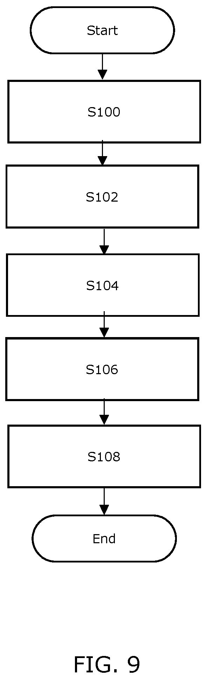

With reference to the flowchart of Figure 9, for either performing loading operations with the loader arm 12, or for roading operations the operator is seated on the seat 19 in a front facing position at step S100. The first seat position switch 49a signals the seat 19 is in this position to the controller 54. If performing loading operations, the selector switch 52 is in its forward position and the controller 54 enables the joystick 42b to operate the loader arm 12 functions.

If roading, selector switch is in neutral to disable the joysticks 42a, b. The operator utilises the primary controls (steering wheel, 36 front foot brake 35a, front foot throttle 38a, transmission drive lever 41) for moving the backhoe loader 10. The secondary controls except the rear foot brake 35b (i.e. the steering roller 50d, drive roller 50g, rear and rear foot throttle 38b) are disabled. The rear foot brake 38b operates hydraulically for reliability reasons and is self-evidently safety critical, so it is considered preferable for it to remain operable at all times. In other embodiments this may however not be the case.

During reverse travel (towards the rear of the backhoe loader 10) the controller 54 signals the rear alert sounder 56b to operate to alert any surrounding personnel to the movement.

To instigate rear drive from this position requires the following steps. At step S102, the operator rotates the seat 19 towards the fully rear facing position.

At step 104, whilst the seat 19 is facing in a direction encompassed by the sector α (Figure 5) none of the seat position switches 49a-c emit a high signal and the controller 54 therefore disables the working arm controls and will not enable the secondary controls.

At step 106, once the seat reaches the sector encompassed by the angle β, the second seat position switch 49b emits a high signal. In response, in this sector the controller 54 permits the working arm controls (joysticks 42a,b, buttons 50a-c, rollers 50e,f) to be enabled, but not the secondary controls. However, as noted above, in this embodiment the operator is required to actively enable the working arm controls by pressing one of buttons 50a-c, for example, before they become functional.

In this position if the selector switch 52 is in the forward position the working arm controls now control movement of the backhoe 22. If the selector switch is in the rear position, the joystick 42b of the controls the loader arm 12.

In the present embodiment the secondary controls are not permitted to be enabled, since the operator's feet are not properly aligned with the rear foot brake and throttle 35b, 38b. thus there is a greater risk that the operator may accidentally depress the incorrect one and compromise the safe operation of the backhoe loader 10.

Once the seat reaches the fully rear position at step 108, the seat position switch 49c signals the position has been reached to the controller 54. In this position the working arm controls continue to be permitted to be enabled. In addition, if the operator presses the rear drive mode switch 48, the secondary controls are enabled (steering roller 50b, drive roller 50g and rear foot throttle 38b) with a single press. As noted above, the rear foot brake 35b remains permanently enabled.

Thus, the operator is able to move the backhoe loader 10 whilst the seat is rear facing by selecting forward and reverse using the drive roller 50g, steer using the steering roller 50d, control prime mover speed using the rear foot throttle 38b and brake using the rear foot brake 35b.

Moving the backhoe loader 10 from this position may enhance productivity when undertaking certain machine operations. For example ditching and trenching operations typically require frequent moving of the backhoe loader 10 to allow the bucket 28 to reach the position where material is to be dug from the trench/ditch. Conventionally, the operator would need to rotate the seat 19 into the front facing position to access the primary controls to reposition the machine, which is not as rapid as being able to reposition whilst at the rear facing position. Other operations which take place whilst the backhoe loader 10 is travelling, such a hedge trimming or mowing with a suitable implement on the backhoe 22, may be unergonomic for the operator if they can only carry them out from the front facing seat 19, since the implement is only visible if the operator looks rearward over their left or right shoulder. By contrast, with the seat rear facing the implement is more visible.

In some embodiments, the travelling speed of the backhoe loader 10 may be restricted when operating in rear drive mode. For example the speed may be restricted to approximately 20km/h in contrast to a maximum speed in the standard mode of 40km/h or 50km/h. In the present embodiment, in which the backhoe loader 10 has a powershift transmission with six gears, this may be achieved by the controller 54 limiting the rear drive mode to operation in second gear only. For other transmission types, the controller 54 may limit the transmission directly to a certain upper speed.

In some embodiments with a 4WS capability, if 2WS is selected when the backhoe loader 10 is operating in rear drive mode the rear wheels 16 may be steered, in contrast 2WS in standard mode where the front wheels 16 are steered. This may provide a more natural feel, particularly when roading at higher speeds in rear drive mode, since the wheels behind the operator take a tighter line, rather than swinging out and taking a wider line.

To return the backhoe loader 10 to front facing operation is the reverse of the above description.

During reverse travel with respect to the seat position when in the rear drive mode (i.e. forward travel of the backhoe loader 10), the controller 54 signals the sounding of the front alert sounder 56a to alert surrounding personnel.

The use of separate alert sounders 56a, b at the front and rear of the backhoe loader 10 has been found to generate audible alerts of sufficient volume for those personnel that risk being in the travel path of the backhoe loader 10 when reversing, but not excessively loud for the operator, as might the case if a single alert sounder were to be provided on the body 14 and be loud enough at both the front and rear.

In one embodiment, when the seat is in the full rear facing position and the rear drive mode switch 48 is actuated to enter rear drive mode, the transmission drive lever 41 is disabled. This prevents inadvertent operation e.g. by another person entering the operator station 18. The drive lever 41 may be re-enabled when rear drive mode is disengaged by pressing the mode switch 48 a second time, or by moving the seat 19 out of the fully rear position.

In one embodiment, the controller 54 monitors if the foot brake 35a, b that the seat 19 is not facing is depressed. This may occur if an object is placed on the foot brake 35a, b, such as an operator's belongings. As both foot brakes 35a, b remain continuously operable, without such an alert a partially applied brake may generate heat and excess wear on the brakes, and increase fuel/energy consumption if the backhoe loader 10 is moving. Such partial application may be sensed by the controller 54 monitoring fluid pressure in the brake circuit (not shown) of the foot brake the operator is facing away from and providing an audio and/or visual alert if the pressure is above a predetermined threshold.

In an embodiment, prime mover 30 speed may be controlled differently as a function of the drive roller 50g state at least when in the rear drive mode.

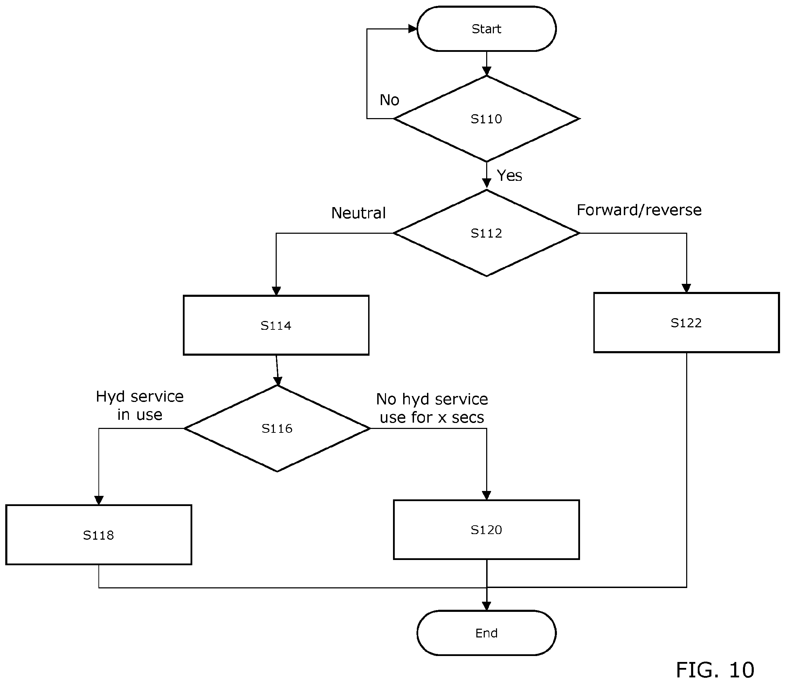

Referring to Figure 10 at step S110, which may follow S108 of Figure 9, the controller 54 determines if the backhoe loader 10 is in rear drive mode. If not, the process does not proceed

If it is in rear drive mode, (seat 19 in fully rear position, rear drive mode switch 48 activated) at step S112 the controller 54 determines if the drive roller 50g is in neutral or in forward or reverse.

If the drive roller is in neutral, at step S114 the controller disregards any inputs from the rear foot throttle 38b and sets prime mover 30 speed from hand throttle 40 position. If the drive roller 50g is in neutral, this is indicative of the operator intending to perform an operation with the backhoe 22. Such operations are typically performed with the backhoe loader 10 operating at a fixed prime mover 30 speed (e.g. 1500-1800rpm for a diesel internal combustion engine) at which the pump 32 is able to supply hydraulic fluids to the actuators 27 with sufficient power for efficient operation of the backhoe 22.

At step S116 the controller 54 monitors for whether a hydraulic service for operating the backhoe 22 or an implement attached to the backhoe has been in use within a previous predetermined time period , for example within the last 5 seconds. This may be determined from demand signals sent from the joysticks 42a,b and/or pressure detected in the hydraulic lines to the actuators 27 or other services.

If a service is in use, then at step S118 the controller 54 signals the prime mover to operate at the speed set by the hand throttle 40.

If there has been no demand within the previous predetermined period, then at step S120, the controller signals the prime mover to operate at an idling speed (approx. 800-850rpm for a diesel internal combustion engine). This ensures that fuel/energy is not being consumed unnecessarily if the backhoe loader 10 is not performing any working operations.

If at step S112 the controller 54 determines the drive roller 54g is in forward or reverse, then at step S122 the hand throttle 40 position input is disregarded and the controller sets the prime mover operating speed in response to rear foot throttle 38b inputs. As the rear foot throttle is biased into an idling speed position and demand is dynamically adjusted by depressing it by a different amount against this biasing, the rear foot throttle 38b is particularly beneficial when manoeuvring the backhoe loader 10, in conjunction with the drive roller 54g.

Although shown with an end point, the process of Figure 10 is repeated periodically, so that if use of a hydraulic service is commenced this will then result in the prime mover 30 operating speed being adjusted from idle to that set by the hand throttle 40 position.

In the illustrated embodiment the backhoe loader 10 has a powershift transmission, which means that utilising the rear foot throttle to control prime mover 30 (engine) speed is most practical. However, for backhoe loader 10 and other internal combustion engine powered working machines fitted with hydrostatic or continuously variable transmissions (CVTs) for example, the rear foot throttle 38b may be replaced by a pedal (not shown) used to set ground speed in proportion to how far it is depressed, and the engine speed and transmission control parameters may be set to achieve that ground speed. Such an approach may also be applicable to working machines utilising one or more electric motors as a prime mover.

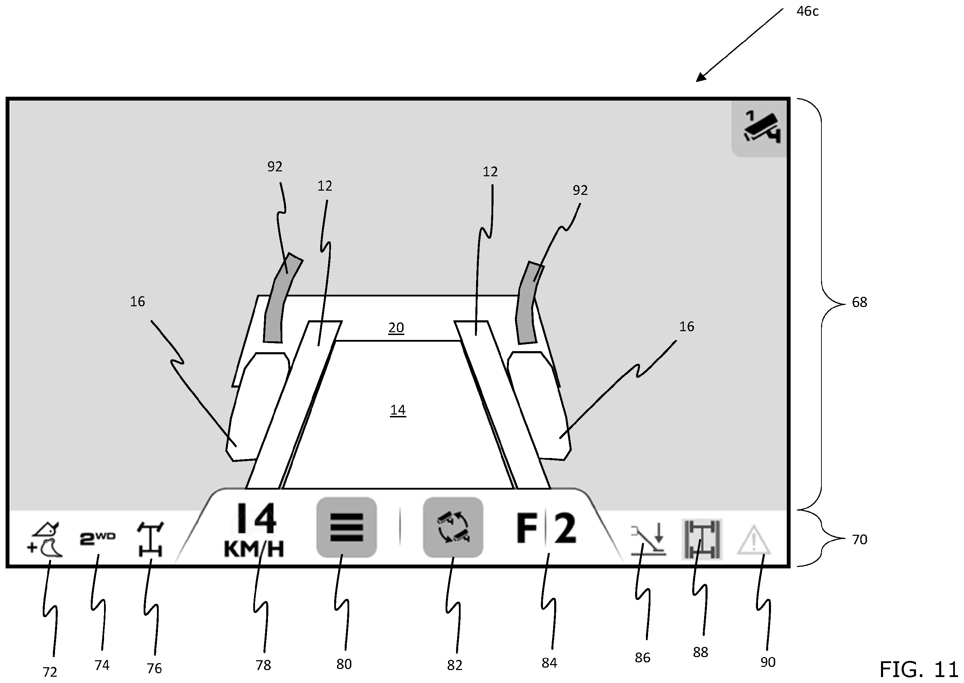

Figure 11 is a depiction of what is visible on the rear display 46c. The upper portion of the display 46c provides a camera area 68 where output from the front mounted camera 66 and other machine cameras (not shown) are visible.

The lower portion provides a machine status area 70, displaying various icons indicative of the status of various machine functions. In this embodiment, from left to right, the status area displays a debog status 72 (a particular mode for freeing the machine from soft ground in which both loader 12 and backhoe 22 controls are active), 2 wheel drive/4 wheel drive status 74, steer mode status 76, travelling speed 78, menu button 80, camera cycle button 82, FNR state and gear selected 84, stabiliser leg state 86, wheel alignment state 88 and a master warning icon 90.

As the rear display 46c is touch sensitive in this embodiment, certain icons may be interactive. For, example the pressing menu button 80 may reveal menu options to change settings for the display 46c itself (such as what information is displayed) or settings for other backhoe loader 10 functions. Pressing the camera cycle button 82 may sequentially show images from other cameras (not shown) fitted to the backhoe loader 10, such as at the end of the loader arm 12 or end of the dipper arm 26.

The presence of such information in the operator's line of sight ensures the operator is able to operate the machine with equivalent levels of safety in rear drive mode, as compared to standard mode, where the information would be displayed on the front and/or side displays 46a, b.

The camera area may overlay additional images, symbols or markings over the camera image. For example, as shown, wheel travel lines 92 may be overlaid on the image to show the path of the front wheels 16 dynamically, depending upon steer angle.

Additionally or alternatively, the steer angle may be displayed numerically (a percentage of maximum, for example) and/or diagrammatically (e.g. as a bar chart) to assist the user in knowing the steering condition when the front wheels 16 are out of their line of sight.

Control of the rear display 46c may, in some embodiments, be linked to the position of the seat 19. If the seat 19 is in the front facing position as detected by switch 49a, the controller may signal the rear display 46c to be dimmed or turned off. This may avoid glare from the screen distracting the operator when operating in standard mode, particularly at night time. Dimming of the display 46c may be achieved by reducing the backlighting thereof in the case of LCD or LED displays or reducing the brightness of individual pixel elements in the case of OLED displays, for example.

If the seat moves away from the front position as sensed by the switch 49a, the screen 46c may turn on again or the brightness may increase under the control of the controller 54. When the seat 19 returns to the front position automatic dimming or switching off again occurs.

Similarly, the front display 46a may be dimmed or switched off if the seat is detected to be in the fully rear facing position detected by switch 49c, and optionally within the sector β, as detected by the switch 49b

In some embodiments the steering roller 50d and/or drive roller 50g may provide two separate output signals or "tracks" to the controller for a given input movement -e.g. a positive steer value from one sensor and a negative output from a corresponding second sensor associated with the roller 50d.

To determine if the signals received from such rollers represents a true operator demand, it is known for controllers to compare the signals to ensure they match, prior to acting on them. If the signals do not match, the controller will log a fault and not act on the operator input.

In contrast, in an embodiment of the present teachings, in the event of non-matching signals from either of the rollers 50d and 50g, the controller 54 may detect an error in one signal and default to acting on the known good signal for a limited period until the backhoe loader 10 is placed in a safe state, for example a safe location at a road-side. When in a safe position, the operator may revert to standard mode and steer and drive using the steering wheel 36 and transmission drive lever 41 until the fault can be repaired. The limited period may be a predetermined period of time or until actuation of the roller 50d, 50g ceases. The speed of operation may be reduced during this limited period.

When the backhoe loader 10 is travelling in standard mode, it is usual for the operator to move the backhoe into a position in which the boom 24 is upright, the dipper 26 is pivoted close to the boom, and the bucket 28 is pivoted upwards therebetween. In addition the boom 24 is slewed into a transverse position so the overall length of the backhoe loader 10 is minimised. However, this stowed position has been found to obscure the operator's view when rear facing and travelling forwards.

Therefore in some embodiments a further "auto stow" function is added to the operations undertaken when the rear drive mode button 48 is actuated. In these embodiments, actuating the rear drive mode switch 48 additionally causes the controller to signal the appropriate spool valves in the main hydraulic control block 34 to move the boom 24 and dipper 26 into the position shown in Figures 1 and 2 with the boom 24 upright, the dipper 26 pivoted close to the boom, and the bucket 28 is pivoted upwards therebetween, but with the boom and dipper parallel to the longitudinal axis x of the backhoe loader 10. In addition in embodiments where the backhoe loader 10 has a powered side-shift mechanism (not shown), the controller 54 may further move the backhoe 22 into a position offset from the longitudinal centreline of the backhoe loader 10 -i.e. proximate one of the stabilisers 44. In this way the operator has a clearer forward view when rear-facing.

In certain embodiments the controller may only instruct this auto stow function to be carried out if for example the operator makes a longer press or a double press on the rear drive mode switch 48. This distinguishes from situations where stowing is not desirable, such as during a brief repositioning operation, or if operating with restricted space around the backhoe 22.

In alternative embodiments the steer roller 50b and drive 50g may be enablable when the seat is front facing. This permits loader arm 12 operations to be carried out with the operator's hands on the joysticks 42a, 42b, rather than with their left hand on the steering wheel 36 and transmission drive lever 41.

In this embodiment the controller is configured to reverse the steer and drive outputs between the front and rear seat positions, based on the signals received from the first and third seat position switches 49a,b, so that operation is consistent across both seat orientations from the perspective of the operator.

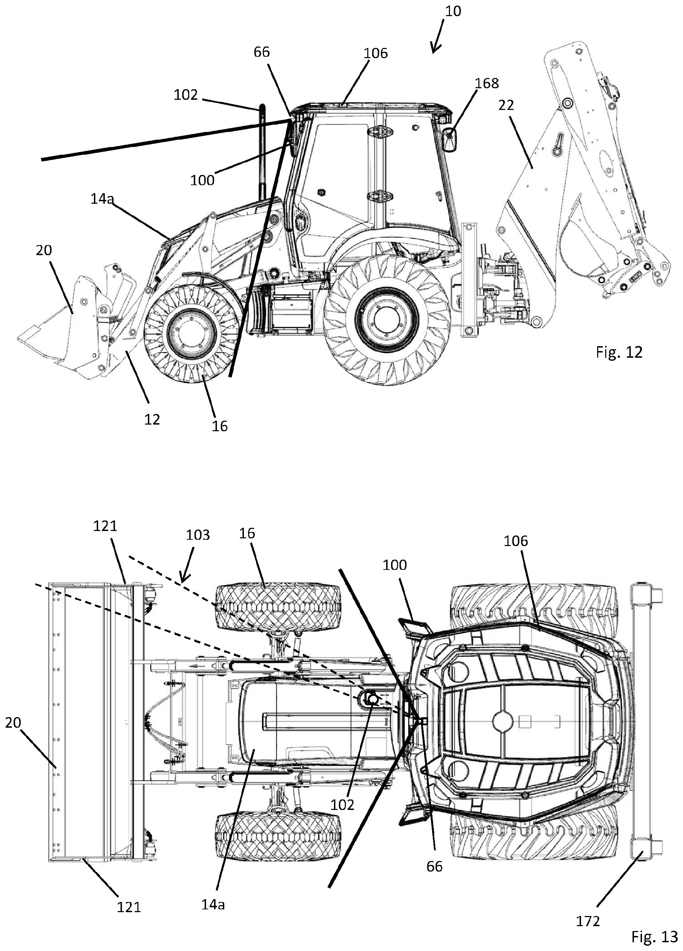

It is commonplace to provide off-highway working machinery with one or more rear-facing mirrors so that an operator can determine what is behind the machine as and when required. This typically involves using so call wing mirrors which provide a view down the sides of the machine and beyond. Such rear facing mirrors 100 can be seen in Figure 12, for example.

The need for seeing behind the operator when in a rear drive mode, that is, seeing the front of the machine 10 with the loader arm 12, is also required. Indeed, the situation in rear drive mode is further complicated for the working machine 10 of the present disclosure due to the length of the loader arm 12 and work implement 20 which is attached. In a conventional backhoe loader, with a work implement in the form of a work shovel or forks for example, the end of the work implement may typically be between 1.5m and 3m from the front wheel axle. This can result in a significant tail swing (up to 2m) when steering in the rear drive mode, particularly when applying full lock and particularly when the machine 10 is using the front wheels 16 to effect steering, effectively resulting in rear wheel steering (due to the operator facing rearwards).

A further issue exists with when operating the machine 10 in a rear drive mode in that the operator is not able to easily determine the direction of the wheels 16 are facing. It may be possible to provide a visual indication of the wheel alignment state 88 as described elsewhere in the present disclosure. However, many operators may prefer to be able to see the wheels directly. In the case of the working machine 10 of the illustrated embodiment, the rear wheels 16 are located below the operator out of sight, and the front wheels 16, which are of course viewable when the operator is forward facing, are behind the operator when in the rear drive mode.

A yet further issue exists in the illustrated example of a backhoe loader in that the engine cover 14a and/or exhaust 102 and/or work implement 20 may act to obscure an operator's view when using mirrors or when looking over their shoulder.

The present disclosure addresses these problems by using a camera positioned and configured to view the work implement 20 and, optionally, one of more of the front wheels 16 to provide the operator with a sufficient field of view around and in front of the machine 10 for safe manoeuvring. It also allows an operator to view either or both of the wheels to determine the direction they are facing in. This is particularly useful for the steering roller 50d in which the wheels 16 may not return to centre and in which there is no indication of the wheel position from the roller 50d.

With reference to Figure 12, there is shown a working machine 10 according to the present disclosure in which there is provided a camera 66 on the front of the operator station 18. The camera 66 is configured to capture image data of the lateral edges 121 work implement 20, which may define the greatest extent of the width of the machine 10.

To provide the optimum view of the work implement 20, the camera 66 is located on a front upper edge of the operator station 18 and is oriented forwards and downwards to provide the work implement 20 in the field of view. The camera 66 is configured to capture image data which is subsequently displayed on the rear display 46c using known imaging techniques as well known in the art.

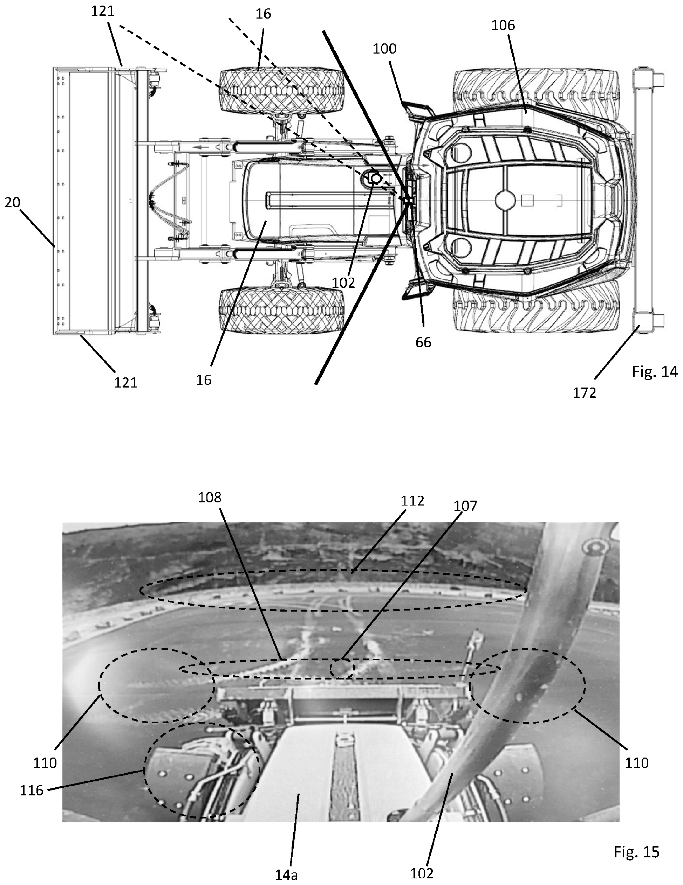

With additional reference to Figure 15, it can be seen that the camera 66 used in the illustrated embodiment has a wide field of view such that it can not only see the work implement 20 and immediately surrounding area, but also a wider field of view which can account for the potential tail swing which arises from the loader arm length and the effective rear wheel steering when in rear drive mode.

The field of view of the camera 66 is also configured to include either or both of the front wheels 16 to allow the operator to determine which direction the front wheels 16 are in. This may be used in conjunction with other indicators of the steering angle such as the alignment icon 88 described herein. For example, the operator may use the alignment icon to determine when the wheels are fully aligned, and may use the image of the front wheels 16 when a non-straight steering angle is required.

The specific horizontal and vertical fields of view will be dependent on the relative dimensions of the machine 10 and work implement 20, and where the camera 66 is located. In the illustrated embodiment, the camera 66 is a wide angled camera having a horizontal field of view of approximately 118 degrees in the horizontal plane. However, the field of view may be may be, for example, between 90 and 180 degrees, preferably between 100 and 145 degrees, more preferably between 110 and 135 degrees.

The camera 66 may be positioned towards the top of the operator station 18 and conveniently mounted to an uppermost cross-member of the roof structure of the operator station 18. As shown in Figure 12 this elevated position may maximise the area which can be viewed immediately ahead of the work implement 20. That is, the higher the camera 66 is in relation to the front of the machine 10, the more the camera 66 is able to capture image data over the engine cover 14a and work implement 20, both of which may obscure the front of the work implement 20. The camera 66 may be angled in the vertical plane to provide a suitable distance beyond the work implement 20, and also provide an adequate view of the front wheels 16.

In relation to the lateral position, the camera 66 may be centrally mounted in relation to one or more of the work implement 20, loader arm 12, the operator station 18 and the working machine 10 (which may coincide in the illustrated embodiment). Providing a centrally mounted camera 66 in the illustrated embodiment is beneficial as it allows for a central view of the front of the machine 10 as would be experienced by an operator. However, the position of the exhaust pipe 102 can obscure either or both of a lateral edge of the implement or one of the wheels.

Some known backhoe loaders incorporate an exhaust pipe 102 which extends vertically upwards through the engine cover 14a. The exhaust pipe 102 may be conventional and include an elongate straight section of pipe which extends through a suitable aperture in the upper surface of the engine cover 14a (which may be referred to as a bonnet or hood in some jurisdictions). An alternative arrangement may be to provide the exhaust 102 to one side or the other of the engine bay such that it can run up the corner post of the operator station 18, for example. However, this can lead to packaging difficulties due to the requirement of a lateral section and vertical transition.

In the illustrated embodiment, the exhaust pipe 102 lies at least partly between the central portion of the roof structure and the work implement. As such, centrally mounting the camera 66 directly to the roof structure would results in the exhaust 102 obstructing the view of the work implement, as shown in Figure 13 - see area 103.

In order to retain the preferred and symmetric view point provided by the central mounting, the camera position has been moved forward of the roof structure on an appropriate support structure 104. The support structure 104 may be a bracket which is attached to the roof structure or provided by or on a superficial extension of a roof panel moulding 106. Hence, the roof panel 106 may comprise a extended overhang for the primary or sole purpose of allowing the camera 66 to be mounted fore of the roof structure.

The camera 66 may incorporate a distorting lens, e.g. a fish eyed lens, which provides a non-rectilinear image. Using such a lens is advantageous for bringing the edge portions of the image close to the centre, for example the front wheels 16, as well as seemingly moving the exhaust 102 away from work implement to give a clear view.

A field of view according to the present disclosure is provided in Figures 14 and 15, in which the camera field of view as displayed on the rear view display screen 46c is centred on the area 107 immediately above the centre of the work implement 20 when in the grounded position. This is advantageous as it is typically the most relevant area for an operator, and also provides a balanced image which can include the front wheels and also the middle distance.

The areas immediately fore 108 and to the lateral edges 110 of the work implement 20 are also clearly in view (albeit the area to the right hand side of the work implement 20 is partially obscured by the exhaust pipe 102. The upper edge of the field of view is sufficient to see a predetermined distance 112 forward of the machine, e.g. >15m.

As can also be seen, only the left hand front wheel 116 can be seen in the displayed image due to the presence of the exhaust pipe 102, however, given the left and right hand front wheels turn by a corresponding amount, viewing only one of the wheels is deemed adequate.

Providing the camera 66 in the chosen location and with a wide field of view provides many advantages when compared to the use of conventional mirrors. The distortion provided by the lens is useful not only to provide the wider field of view, but also to bring the wheels into the centre of the image and to move the exhaust pipe 102 to the sides of the image.

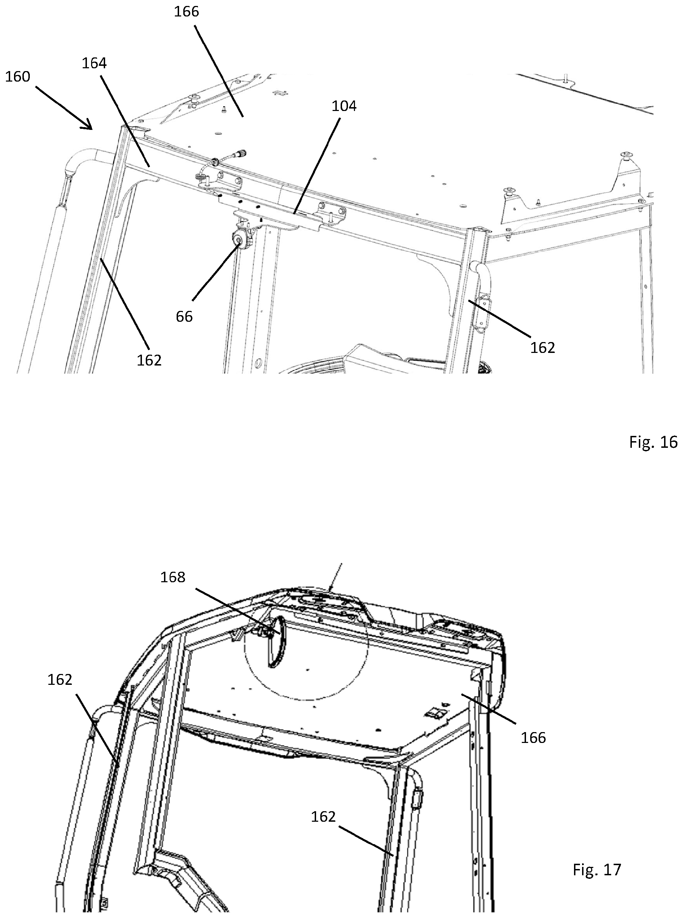

In the illustrated embodiment, the roof structure of the operator station 18 comprises a frame 160 of elongate structural members which combine to provide ROPS and FOPS protection for the operator. Figure 16 shows front vertical posts 162 posts which have a cross member 164 extending therebetween. The vertical posts 162 and cross member 164 may be hollow sectioned and conventional. In some embodiments, the roof structure may incorporate a structural panel 166 which extends between the lateral cross members to increase structural rigidity. It will be appreciated that there may be further vertical posts rearwards of the view shown in Figure 16 and corresponding cross-members extending therebetween to provide a ring beam.

The roof structure may be finished with a dress panel 106 as shown in Figure 12. The panel 106 may be provided primarily for water protection/drainage and aesthetics and may comprise a moulded plastic, for example.

In some embodiments, the camera 66 may be mounted directly to the cross member 164, structural panel 166 or dress panel 106. In the illustrated embodiment, the camera 66 is mounted to the roof structure 160 via a support structure 106 in the form of a cantilever bracket. The support structure 106 may be suitably attached to the cross member 164 by any known technique such as with fixings e.g. bolts, or via welding, for example. In the illustrated embodiment, the bracket is conveniently attached using mounting points which are used to attach the dress panel.

The support structure 106 may be used to bring the camera 66 position forward in relation to the operator station 18 and the exhaust position to improve the view. As such, the mounting support may be dimensioned to move the camera lens up to 300mm, preferably 200mm, more preferably 175mm forward of the cab structure 164.

With reference to Figures 1, 17 and 18, Backhoe loaders include a working arm (i.e. a backhoe) 22 which is located on the rear of the machine and typically used for excavating. The working arm 22 may be swing mounted on a king post in the centre of the machine to allow the arm to pivot around a vertical pin, or, as shown, may be configured to laterally translate on a side-shifting arrangement 172 which allows the working arm 22 to be used in laterally offset positions relative to the centreline of the machine. Both are commonly known in the art.

When the machine 10 is provided in the rear drive mode, it will be apparent that the working arm 22 will at least partially obscure the operator view in the direction of travel. Choosing a favourable position for the working arm 22 may be one way to mitigate the obscured operator view. However, there will always be a blind spot for an operator when driving in reverse mode.

In order to address this issue, the illustrated embodiments includes a view extender 168 mounted towards a lateral edge of the operator station 18, the view extender 168 being configured to provide the operator with a view of an area to the rear of the machine from the operator seat when facing rearwards in the operator station 18.

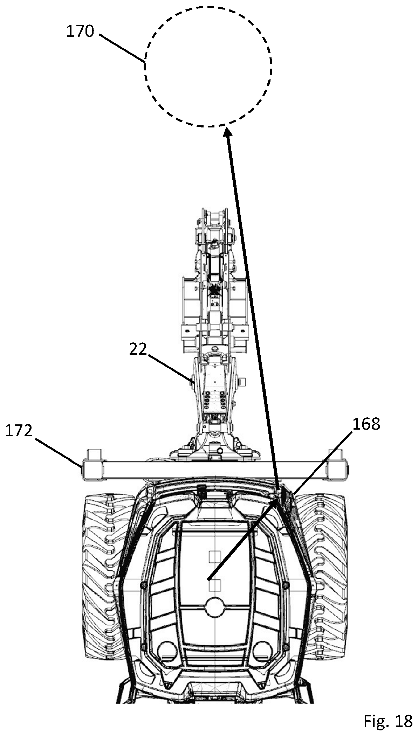

Figure 18 shows a view extender 168 in the form of a mirror which is attached to the roof structure of the operator station 18 via a conventional support structure in the form of a cantilevered arm. The position of the mirror is at the extreme outer edge of the operator station 18 and positioned aft of the operator station rear windscreen. The mirror position may be adjustable. In the illustrated embodiment, the mirror is positioned and angled such that it provides a view of an area 170 rearwards of the working arm 22 when in a central, longitudinally aligned rearward travel position.

In the illustrated embodiment, the working arm 22 comprises a boom and a dipper, and the rearward travel position comprises the boom and dipper being in retracted positions in relation to the chassis and extending rearwards in a parallel relation to a principal axis of the working machine in the centre of the machine, as shown in Figure 18.

In some embodiments, the view extender 168 may comprise one or more cameras which can provide an image of the blind spot on the rear display 46c. The one or more cameras may be located in a different location to the mirror. For example, there may be a camera located on each of the uprights of the side-shifting frame or edges of the operator station to provide a view down either side of the working arm when the working arm 22 is stowed in a laterally shifted longitudinally aligned location which would free up the view in the central region of the rear windscreen.

The one or more embodiments are described above by way of example only and it will be appreciated that the variations are possible without departing from the scope of protection afforded by the appended claims. In particular, whilst the teachings have been described in the context of backhoe loaders, it will be appreciated that at least some benefits of the teachings may be applied to other working machines in which an operator station is fixed relative to the machine's ground engaging propulsion structure, and in which the working arm is located at one end of the body. An example of such a working machine is a site dumper. It will be understood that the skip of such a dumper may constitute the working arm.

## Claims

1. A backhoe loader comprising:
a loader arm, an excavator arm and an operator station, such as an operator cab;
a ground engaging propulsion structure;
an operator seat located at the operator station, the operator seat being moveable between a first position facing the loader arm and a second position facing the excavator arm;
wherein the backhoe loader is moveable in a rear drive mode when the operator seat is positioned in the second position.

2. The backhoe loader of claim 1, further comprising a camera mounted at the front of the operator station and having a field of view configured to capture image data of the loader arm and an area at a free end of the loader arm upon which a work implement may be mounted; and a display configured to display the image data captured by the camera, the display being positioned at the operator station and within an operator's field of vision when seated on the seat in the second position.

3. The backhoe loader of claim 1 or claim 2, wherein the loader arm comprises a work implement mounted thereto, the work implement having outermost lateral edges defining the width of the work implement and, optionally the backhoe loader; optionally wherein the camera has a field of view configured to capture image data of the work implement; optionally, wherein the camera is configured to capture image data of one or more of: the outermost lateral edges of the work implement; an area either immediately in front of or adjacent to the outermost lateral edges; and, either or both of front wheels of the ground engaging propulsion structure.

4. The backhoe loader of claim 3, wherein the display further comprises an indicator of the steering angle, such as one or more of wheel travel lines are overlaid on the image data to show a path of the front wheels dynamically, depending upon a steer angle thereof, a numerical display of steer angle, a diagrammatic display of steer angle, and a wheel alignment icon.

5. The backhoe loader of any preceding claim, wherein the operator station comprises controls for moving the working machine via the ground engaging propulsion structure and working arm controls for controlling movement of the excavator arm relative to a body of the backhoe loader, wherein the working arm controls comprise a first control lever mounted to the seat, a steering roller being mounted on the first control lever for controlling the steering angle of the front wheels, the steering roller being operable to control steering in the rear drive mode.

6. The backhoe loader of claim 5, wherein the steering roller is located on a face of the first control lever facing away from the operator and is optionally arranged to be displaced side-to-side about a generally vertical axis; and/or optionally wherein the steering roller is biased to a centre position and has an output which increases as the steering roller is displaced from the centre position in either direction; optionally wherein the output is generally proportional to the degree of displacement from the centre position.

7. The backhoe loader of claim 5 or claim 6, wherein the working arm controls comprise a second control lever mounted to the seat and wherein a drive selector input is mounted on the second control lever for controlling forward and reverse drive of the backhoe loader, the drive selector input being operable in the rear drive mode.

8. The backhoe loader of claim 7, wherein the drive selector input is located on a face of the second control lever facing away from the operator and is optionally arranged to be displaced up and down relative to the shaft of the second control lever; and/or optionally wherein the drive selector input comprises a centre position corresponding to neutral, a first further position corresponding to forward drive and a second further position corresponding to reverse drive; optionally wherein the drive selector input is biased into the centre position from either of the further positions.

9. The backhoe loader of claim 7 or claim 8, comprising a rear drive mode switch, wherein the steering roller and the drive selector input are enabled in response to actuation of the rear drive mode switch when the operator seat is positioned in the second position.

10. The backhoe loader of claim 9, comprising a transmission drive lever, wherein when the operator seat is in the second position and the rear drive mode switch is actuated to enter the rear drive mode, the transmission drive lever is disabled.

11. The backhoe loader of any preceding claim, further comprising a rear foot brake and a rear foot throttle located at a rear of the operator station and accessible to the operator when the operator seat is positioned in the second position.

12. The backhoe loader of claim 11, wherein, when the operator seat is positioned in the second position and the backhoe loader is operating in the rear drive mode, both the rear foot throttle and the rear foot brake are enabled.

13. The backhoe loader of any preceding claim, having a four-wheel steering capability and being operable in a two-wheel steering mode, wherein rear wheels of the ground engaging propulsion structure are steered in the two-wheel steering mode when the backhoe loader is operating in the rear drive mode.

14. The backhoe loader of claim 1 or any one of claims 5 to 13, further comprising a display positioned at the operator station and within an operator's field of vision when seated on the operator seat in the second position, wherein the display is a raster type display.

15. The backhoe loader of any preceding claim, wherein a travelling speed of the backhoe loader is restricted when operating in the rear drive mode.
